# EUROPÄISCHE PATENTSCHRIFT

(11) **EP 0 433 935 B1**
(45) Veröffentlichungstag und Bekanntmachung des Hinweises auf die Patenterteilung: **20.04.1994**
(21) Anmeldenummer: 90124388.1
(22) Anmeldetag: 17.12.1990
(51) Int. Cl.: B61D 15/00, B61D 15/12

(54) **Schienenverfahrbarer Motorturmwagen**
Motorized railway scaffold car
Véhicule ferroviaire motorisé avec nacelle mobile

(30) Priorität: 21.12.1989 AT 2911/89
(43) Veröffentlichungstag der Anmeldung: 26.06.1991
(73) Patentinhaber: Franz Plasser Bahnbaumaschinen- Industriegesellschaft m.b.H., 1010 Wien (AT)
(72) Erfinder: Oellerer, Friedrich, A-4040 Linz (AT); Gruber, Leopold Rudolf, A-3270 Scheibbs (AT)
(74) Vertreter: Rau, Manfred, Dr. Dipl.-Ing.

(56) Entgegenhaltungen:
- DE-A- 2 658 470
- FR-A- 1 468 849

## Beschreibung

Die Erfindung betrifft einen schienenverfahrbaren Motorturmwagen mit einem Fahrwerke aufweisenden Fahrgestellrahmen, einem Aufbau mit endseitig angeordneten Fahrkabinen und einer mit einer Höhenverstelleinrichtung verbundenen, im abgesenkten Zustand unmittelbar oberhalb des Aufbaues befindlichen Hebebühne.

Es ist - gemäß DE-PS 26 58 470 - bereits ein schienenverfahrbares Arbeitsgerät mit einem endseitig jeweils auf Fahrwerken ruhenden Fahrgestellrahmen und einem auf diesem angeordneten Aufbau bekannt. Mittig in diesem Aufbau befindet sich ein Drehschemel, der in seinem aus dem Dach des Aufbaues herausragenden Abschnitt mit einem teleskopisch verlängerbaren Ausleger verbunden ist. Das vordere Ende dieses Auslegers ist gelenkig mit einem Kipparm verbunden, an dem ein Arbeitskorb fixiert ist. Während der Überstellfahrt bzw. außerhalb des Arbeitseinsatzes befindet sich der genannte Kipparm in einer vertikalen Lage, wobei der Arbeitskorb unmittelbar oberhalb des Fahrgestellrahmens zu liegen kommt. Zu diesem Zweck ist das eine Stirnende des Aufbaues gegenüber dem Stirnende des Fahrgestellrahmens zurückversetzt. Die Dachfläche des Aufbaus weist im Bereich des Drehschemels eine konisch ausgebildete Vertiefung zur Aufnahme der Anschlußelemente des Auslegers auf. Ein derartiges bekanntes Arbeitsgerät ermöglicht zwar einen relativ weiten, auch in bezug auf die Gleismittelachse seitlich versetzten Arbeitsbereich, eignet sich jedoch weniger für Arbeiten am Fahrleitungsdraht. Außerdem ist der Arbeitskorb zur Aufnahme lediglich einer Person geeignet.

Es ist auch - gemäß einem Prospekt "OBW 10.029" der Firma Plasser & Theurer - ein der Erfindung zugrundeliegender, schienenverfahrbarer Motorturmwagen bekannt, der speziell für Arbeiten an der Fahrleitung ausgebildet ist und zu diesem Zweck eine geräumige Hebebühne unmittelbar oberhalb des Aufbaues aufweist. Diese ist mit Hilfe einer scherengitterartig ausgebildeten Höhenverstelleinrichtung höhenverstellbar und in einem Längsendbereich um eine vertikale Achse in einer horizontalen Ebene endlos drehbar. In einem aufbaufreien Endbereich des Fahrgestellrahmens ist noch ein höhen- und seitenverstellbarer Ladekran vorgesehen, an dem gegebenenfalls ein Arbeitskorb für Arbeiten in von der Maschine weiter distanzierten Bereichen, z.B. am Fahrleitungsmast, befestigt werden kann. Die zur Aufnahme mehrerer Personen sowie auch zur Materiallagerung entsprechend geräumig ausgebildete Hebebühne ist im abgesenkten Zustand auf Grund der zwischen dem Aufbau und der Bodenfläche der Hebebühne befindlichen Höhenverstelleinrichtung relativ weit von der Schienenoberkante distanziert, so daß gegebenenfalls das Lichtraumprofil überschritten wird. In diesem Fall muß das die Bodenfläche der Hebebühne umgrenzende Sicherheitsgitter gelöst werden.

Der Erfindung liegt die Aufgabe zugrunde, einen schienenverfahrbaren Motorturmwagen der eingangs beschriebenen Art zu schaffen, dessen Hebebühne mit lediglich geringem konstruktiven Mehraufwand in einem vergrößerten Arbeitsbereich einsetzbar ist.

Diese Aufgabe wird erfindungsgemäß dadurch gelöst, daß die Höhenverstelleinrichtung durch einen mit der Hebebühne verbundenen, einen Höhenverstellantrieb aufweisenden Ausleger gebildet ist, der zur Seitenverschwenkung um eine vertikale Drehachse am der Hebebühne gegenüberliegenden Ende eine Drehvorrichtung aufweist. Eine derartig ausgebildete Hebebühne ist in besonders vorteilhafter Weise mit Hilfe des Auslegers zur Gänze auch seitlich in bezug auf die Maschinenlängsachse verschwenkbar. Dadurch besteht die Möglichkeit, die Hebebühne beispielsweise auch bei bereits montiertem Fahrleitungsdraht seitlich und etwa auf gleicher Höhe neben diesem zu positionieren, so daß ein ungehinderter Zugriff auf die über dem Fahrleitungsdraht angeordneten Halterungen möglich ist. Des weiteren ist durch die Anordnung eines Auslegers die Stabilität der Hebebühne auch in seitlich weit ausgeschwenkter und maximal angehobener Einsatzposition uneingeschränkt.

Eine weitere vorteilhafte Ausbildung der Erfindung besteht darin, daß der mit der Hebebühne verbundene Ausleger im abgesenkten Zustand wenigstens teilweise innerhalb des Aufbaues angeordnet und die Drehvorrichtung mit dem Fahrgestellrahmen verbunden ist, wobei der ein Dach bildende obere, etwa horizontale Abschnitt des Aufbaues im Bereich des Auslegers eine Öffnung aufweist. Mit dieser speziellen Ausbildung ist die Hebebühne für die Überstellfahrt direkt über dem Aufbau positionierbar, so daß auch bei etwas höherer Ausbildung des die Hebebühne umgrenzenden Sicherheitgeländers das Lichtraumprofil nicht überschritten wird.

Gemäß einer weiteren vorteilhaften Ausbildungsvariante der Erfindung ist vorgesehen, daß die Hebebühne und die Drehvorrichtung zur Horizontalführung der Hebebühne mit einem Lenker gelenkig verbunden ist. Damit ist sichergestellt, daß sich die Hebebühne unabhängig von ihrer jeweiligen Höhen- und Seitenlage immer in einer horizontalen Position befindet.

Der Ausleger ist gemäß einer weiteren vorteilhaften Ausbildung der Erfindung einerseits an einer quer zur Maschinenlängsrichtung verlaufenden Stirnwand der Hebebühne und andererseits an der am Dach des Aufbaues befindlichen Drehvorrichtung befestigt. Mit dieser Ausbildung ist die Hebebühne in vorteilhafter Weise für die Überstellfahrt unmittelbar oberhalb des Aufbaues positionierbar, wobei dessen Dach geschlossen ausgebildet werden kann.

Nach einer anderen Weiterbildung der Erfindung ist zwischen dem Ausleger und der Hebebühne ein Drehantrieb zur Verdrehung der Hebebühne um eine etwa vertikale Achse vorgesehen. Damit ist auch bei einer größeren seitlichen Verschwenkung des Auslegers eine problemlose Anordnung der Hebebühne parallel zur Maschinen- bzw. Fahrdrahtlängsrichtung möglich.

Schließlich besteht noch eine weitere vorteilhafte Ausbildung der Erfindung darin, daß an der Innenseite der Längsseitenwand des Aufbaues eine Treppe und eine daran anschließende Öffnung im Dach des Aufbaues vorgesehen ist, wobei die Öffnung in abgesenkter und bezüglich der Maschinenquerrichtung mittiger Lage der Hebebühne zwischen dieser und der Längsseitenwand angeordnet ist. Mit Hilfe einer derartigen Treppe ist ein gefahrloser und bequemer Zustieg zur Hebebühne möglich, ohne dabei die Maschine verlassen zu müssen.

Im folgenden wird die Erfindung an Hand zweier Ausführungsbeispiele näher beschrieben.

Es zeigen:
Fig.1 eine Seitenansicht eines erfindungsgemäß ausgebildeten Motorturmwagens mit einer durch einen Ausleger höhenverstell- und seitenverschwenkbaren Hebebühne,
Fig.2 eine Draufsicht auf den Motorturmwagen gemäß Fig.1,
Fig.3 eine vergrößerte Seitenansicht eines weiteren Ausführungsbeispieles einer erfindungsgemäß ausgebildeten Hebebühne und
Fig.4 eine Draufsicht auf die Hebebühne gemäß Fig.3.

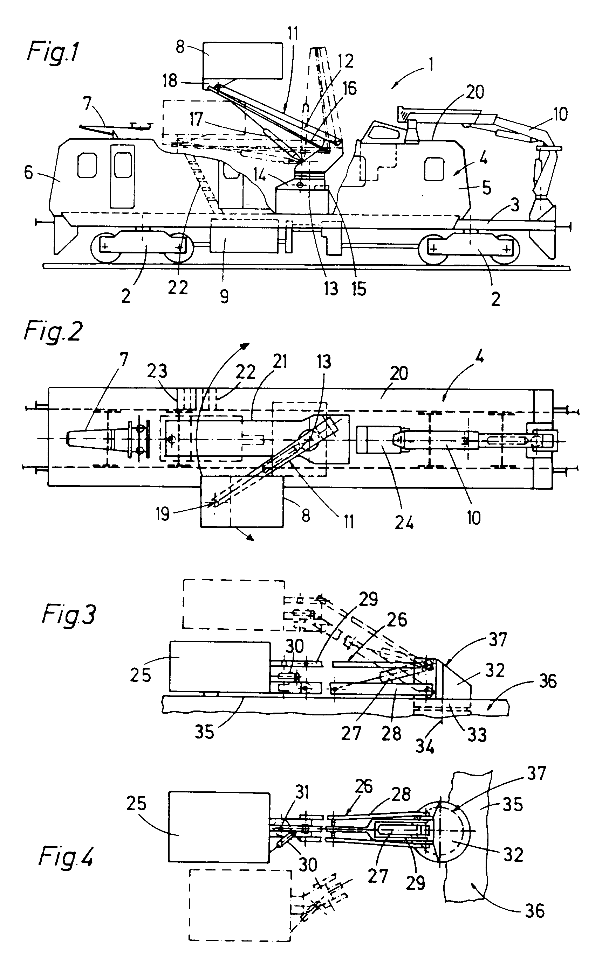

Ein in Fig.1 und 2 dargestellter Motorturmwagen 1 weist einen auf Fahrwerken 2 abgestützten Fahrgestellrahmen 3 und einen mit diesem verbundenen Aufbau 4 auf. Dieser besteht im wesentlichen aus zwei endseitig angeordneten, Führerstände aufweisenden Fahrkabinen 5,6, einem Meßbügel 7 und einer Hebebühne 8. Die Triebachsen der Fahrwerke 2 sind über ein Lastschaltgetriebe durch einen Antriebsmotor 9 antreibbar. Mit Hilfe eines endseitig am Fahrgestellrahmen 3 angeordneten hydraulischen Ladekranes 10 ist ein problemloses Be- und Entladen eventuell mitgeführter Materialwaggons möglich. Bedarfsweise kann an diesem Ladekran 10 ein Arbeitskorb für von der Maschine weiter distanzierte Arbeitsbereiche, z.B. direkt am Fahrleitungsmast, angebracht werden.

Eine zur Höhenverstellung der Hebebühne 8 vorgesehene Höhenverstelleinrichtung 11 ist durch einen Ausleger 12 gebildet, der zur Seitenverschwenkung um eine vertikale Drehachse 13 am der Hebebühne 8 gegenüberliegenden Ende eine Drehvorrichtung 14 mit einem Drehantrieb 15 aufweist. Um die Hebebühne 8 unabhängig von ihrer Höhenlage jeweils in horizontaler Lage zu halten, ist ein Lenker 16 vorgesehen. Die Höhenverstellung des Auslegers 12 erfolgt durch einen Höhenverstellantrieb 17. Zwischen dem Ausleger 12 und der Hebebühne 8 ist ein weiterer Drehantrieb 18 zur Verdrehung der Hebebühne 8 um eine etwa vertikale Achse 19 angeordnet.

Wie mit strichpunktierten Linien angedeutet, ist der mit der Hebebühne 8 verbundene Ausleger 12 im für die Überstellfahrt abgesenkten Zustand innerhalb des Aufbaues 4 angeordnet, wobei der ein Dach 20 bildende obere, etwa horizontale Abschnitt des Aufbaues 4 im Bereich des Auslegers 12 eine Öffnung 21 aufweist. Durch die Anordnung des Auslegers 12 in dieser Öffnung 21 des Aufbaues 4 besteht die Möglichkeit, die Hebebühne 8 für die Überstellfahrt in eine relativ tiefe Lage zu verbringen, so daß Überschreitungen des Lichtraumprofiles zuverlässig ausgeschlossen sind.

Wie insbesondere in Fig.2 ersichtlich, ist an der Innenseite der Längsseitenwand des Aufbaues 4 eine Treppe 22 und eine daran anschließende Öffnung 23 im Dach 20 vorgesehen. Diese Öffnung 23 ist in abgesenkter und bezüglich der Maschinenquerrichtung mittigen Lage der Hebebühne 8 zwischen dieser und der genannten Längsseitenwand angeordnet. Zur Steuerung der verschiedenen Antriebe 15,17 und 18 zur Höhen- und Seitenverstellung der Hebebühne 8 ist in dieser eine zentrale Steuereinrichtung vorgesehen. Wie durch einen Pfeil angedeutet, kann die Hebebühne 8 unter Beaufschlagung des Drehantriebes 15 in eine bezüglich der Maschinenlängsachse außermittige Lage seitlich verschwenkt werden, so daß die Hebebühne 8 beispielsweise seitlich neben dem Fahrleitungsdraht positionierbar ist. Dabei ist gleichzeitig unter Beaufschlagung des Drehantriebes 18 eine entsprechende parallele Ausrichtung der Hebebühne zum Fahrleitungsdraht möglich. Eine Arbeitskabine 24 dient zur Beobachtung des Meßbügels 7.

Eine in Fig.3 und 4 dargestellte Hebebühne 25 ist mit einer an deren Stirnseite befestigten Höhenverstelleinrichtung 26 verbunden. Diese besteht aus einem mit einem Höhenverstellantrieb 27 verbundenen Ausleger 28 und einem Lenker 29. Zwischen dem Ausleger 28 und der Hebebühne 25 ist ein Drehantrieb 30 zur Verdrehung der Hebebühne 25 um eine etwa vertikale Achse 31 vorgesehen. Ausleger 28 und Lenker 29 bilden gemeinsam eine Parallelogrammanlenkung, so daß sich die Bodenfläche der Hebebühne 25 unabhängig von ihrer Höhenposition jeweils in einer horizontalen Lage befindet. Ein mit dem Ausleger 28 und dem Lenker 29 gelenkig verbundener Drehschemel 32 ist mit Hilfe eines Drehantriebes 33 um eine vertikale Achse 34 verdrehbar. Die Hebebühne 25 ist in den Fig.3 und 4 mit vollen Linien im für die Überstellfahrt abgesenkten Zustand dargestellt und befindet sich unmittelbar über einem Dach 35 eines mit einem Fahrgestellrahmen verbundenen Aufbaues 36 eines Motorturmwagens. Drehschemel 32 und Drehantrieb 33 bilden eine Drehvorrichtung 37.

Sowohl die in Fig.1 und 2 als auch die in Fig.3 und 4 dargestellte Höhenverstelleinrichtung 11 bzw. 26 kann teleskopisch verlängerbar ausgebildet sein.

## Patentansprüche

1. Schienenverfahrbarer Motorturmwagen mit einem Fahrwerke aufweisenden Fahrgestellrahmen, einem Aufbau mit endseitig angeordneten Fahrkabinen und einer mit einer Höhenverstelleinrichtung verbundenen, im abgesenkten Zustand unmittelbar oberhalb des Aufbaues befindlichen Hebebühne, **dadurch gekennzeichnet,** daß die Höhenverstelleinrichtung (11;26) durch einen mit der Hebebühne (8;25) verbundenen, einen Höhenverstellantrieb (17;27) aufweisenden Ausleger (12;28) gebildet ist, der zur Seitenverschwenkung um eine vertikale Drehachse (13;34) am der Hebebühne (8;25) gegenüberliegenden Ende eine Drehvorrichtung (14;37) aufweist.

2. Motorturmwagen nach Anspruch 1, dadurch gekennzeichnet, daß der mit der Hebebühne (8) verbundene Ausleger (12) im abgesenkten Zustand wenigstens teilweise innerhalb des Aufbaues (4) angeordnet und die Drehvorrichtung (14) mit dem Fahrgestellrahmen (3) verbunden ist, wobei der ein Dach (20) bildende obere, etwa horizontale Abschnitt des Aufbaues (4) im Bereich des Auslegers (12) eine Öffnung (21) aufweist.

3. Motorturmwagen nach Anspruch 1 oder 2, da-durch gekennzeichnet, daß die Hebebühne (8) und die Drehvorrichtung (14) zur Horizontalführung der Hebebühne mit einem Lenker (16) gelenkig verbunden ist.

4. Motorturmwagen nach Anspruch 1, dadurch gekennzeichnet, daß der Ausleger (12) einerseits an einer quer zur Maschinenlängsrichtung verlaufenden Stirnwand der Hebebühne (25) und andererseits an der am Dach (35) des Aufbaues (36) befindlichen Drehvorrichtung (37) befestigt ist.

5. Motorturmwagen nach einem der Ansprüche 1 bis 4, dadurch gekennzeichnet, daß zwischen dem Ausleger (12;28) und der Hebebühne (8;25) ein Drehantrieb (18, 30) zur Verdrehung der Hebebühne (8;25) um eine etwa vertikale Achse (19;31) vorgesehen ist.

6. Motorturmwagen nach einem der Ansprüche 1 bis 5, dadurch gekennzeichnet, daß an der Innenseite der Längsseitenwand des Aufbaues (4) eine Treppe (22) und eine daran anschließende Öffnung (23) im Dach (20) des Aufbaues (4) vorgesehen ist, wobei die Öffnung (23) in abgesenkter und bezüglich der Maschinenquerrichtung mittiger Lage der Hebebühne (8) zwischen dieser und der Längsseitenwand angeordnet ist.

## Claims

1. A mobile railway motor tower wagon comprising a chassis frame having undercarriages, a superstructure with driver's cabs arranged at each end and a lifting platform connected to a vertical adjustment device and in the lowered state situated immediately above the superstructure, characterized in that the vertical adjustment device (11;26) is formed by an arm (12;28) which is connected to the lifting platform (8;25) and has a vertical adjustment drive (17;27) and which has a turning mechanism (14;37) at the opposite end to the lifting platform (8;25) for lateral pivoting about a vertical axis of rotation (13;34).

2. A motor tower wagon according to claim 1, characterized in that the arm (12) connected to the lifting platform (8) is arranged in the lowered state at least partially within the superstructure (4) and the turning mechanism (14) is connected to the chassis frame (3), the upper, approximately horizontal portion of the superstructure (4) which forms a roof (20) having an opening (21) in the region of the arm (12).

3. A motor tower wagon according to claim 1 or 2, characterized in that the lifting platform (8) and the turning mechanism (14) is connected in an articulated manner to a guide rod (16) for keeping the lifting platform in a horizontal position.

4. A motor tower wagon according to claim 1, characterized in that the arm (12) is attached on the one hand to an end wall of the lifting platform (25) extending transversely to the longitudinal direction of the machine and on the other hand to the turning mechanism (37) located on the roof (35) of the superstructure (36).

5. A motor tower wagon according to one of claims 1 to 4, characterized in that a rotary drive (18;30) is provided between the arm (12;28) and the lifting platform (8;25) for turning the lifting platform (8;25) about an approximately vertical axis (19;31).

6. A motor tower wagon according to one of claims 1 to 5, characterized in that steps (22) are provided on the inside of the longitudinal side wall of the superstructure (4) and an opening (23) adjoining the said steps is provided in the roof (20) of the superstructure (4), the opening (23) being arranged, with the lifting platform (8) in the lowered, central position with respect to the transverse direction of the machine, between the said lifting platform and the longitudinal side wall.

## Revendications

1. Wagon motorisé à plate-forme mobile déplaçable par roulement sur les rails, comprenant un châssis de véhicule roulant présentant des trains de roulement, une superstructure avec des cabines de conduite disposées au côté des extrémités et une plate-forme de levage reliée à un dispositif de réglage en hauteur et se trouvant dans l'état abaissé directement au-dessus de la superstructure, caractérisé en ce que le dispositif de réglage en hauteur (11;26) est constitué par un bras (12;28) relié à la plate-forme de levage (8;25) et présentant une commande de réglage en hauteur (17;27), ledit bras présentant, en vue du pivotement latéral autour d'un axe de rotation vertical (13;34), à l'extrémité opposée à la plate-forme de levage (8;25), un dispositif tournant (14;37).

2. Wagon motorisé à plate-forme mobile selon la revendication 1, caractérisé en ce que le bras (12) relié à la plate-forme de levage (8) est disposé dans l'état abaissé au moins partiellement à l'intérieur de la superstructure (4), et que le dispositif tournant (14) est relié au châssis de véhicule roulant (3), le tronçon supérieur, à peu près horizontal, formant un toit (20) de la superstructure (4) présentant au voisinage du bras (12) une ouverture (21).

3. Wagon motorisé à plate-forme mobile selon la revendication 1 ou 2, caractérisé en ce que la plate-forme de levage (8) et le dispositif tournant (14) sont reliés de façon articulée à une bielle (16), pour le guidage horizontal de la plate-forme de levage.

4. Wagon motorisé à plate-forme mobile selon la revendication 1, caractérisé en ce que le bras (12) est fixé, d'une part, à une paroi frontale de la plate-forme de levage (25) s'étendant transversalement à la direction longitudinale de la machine et, d'autre part, au dispositif tournant (37) se trouvant sur le toit (35) de la superstructure (36).

5. Wagon motorisé à plate-forme mobile selon l'une des revendications 1 à 4, caractérisé en ce qu'il est prévu entre le bras (12;28) et la plate-forme de levage (8;25) une commande d'entraînement en rotation (18;30) pour faire tourner la plate-forme de levage (8;25) autour d'un axe à peu près vertical (19;31).

6. Wagon motorisé à plate-forme mobile selon l'une des revendications 1 à 5, caractérisé en ce qu'il est prévu sur le côté intérieur de la paroi latérale longitudinale de la superstructure (4) un escalier (22) et une ouverture (23) qui en fait suite dans le toit (20) de la superstructure (4), l'ouverture (23) étant disposée, lorsque la plate-forme de levage (8) se trouve en position abaissée et au centre relativement à la direction transversale de la machine, entre celle-ci et la paroi latérale longitudinale.
